# EUROPEAN PATENT APPLICATION

(11) **EP 3 828 720 A2**
(43) Date of publication of application: **02.06.2021**
(21) Application number: 21165043.7
(22) Date of filing: 25.03.2021
(51) Int. Cl.: G06F 16/00

(54) **METHOD AND APPARATUS FOR MERGING DATA OF BUILDING BLOCKS, DEVICE AND STORAGE MEDIUM**

(30) Priority: 22.06.2020 CN 202010573803
(71) Applicant: Beijing Baidu Netcom Science and Technology Co., Ltd., Beijing 100085 (CN)
(72) Inventor: ZHANG, Yiyuan, BEIJING, 100085 (CN); TONG, Juntao, BEIJING, 100085 (CN)
(74) Representative: Cabinet Beau de Loménie

(57) **Abstract**

The present disclosure discloses a method and apparatus for merging data of building blocks, a device and a storage medium, and relates to the field of electronic map and big data. A specific implementation comprises: acquiring (101) data of building blocks of a target work region; dividing (102) the target work region containing the data of building blocks into at least one target region based on a preset geographic isolation attribute; dividing (103) each target region into at least one grid region based on a direction feature of a building block obtained by performing a direction feature extraction on the data of building blocks; and determining (104) a relative positional relationship between corresponding building blocks based on data of building blocks in each grid region, and merging data of building blocks of at least two building blocks having a preset positional relationship.

## Description

### TECHNICAL FIELD

The present disclosure relates to the field of data processing technology, specifically to the field of electronic map and big data, and more specifically to a method and apparatus for merging data of building blocks, a device and a storage medium.

### BACKGROUND

Data of building blocks of an architecture, as a geographic element in an electronic map, plays a very important role in guiding a user to position and perceive the surrounding environment. In the map, the data of building blocks is generally expressed in superposition with other elements such as a road and a POI, and the display effect thereof directly affects the reading experience of the user.

Polygon merging of building blocks is an important research part of the map generalization. During the change from a small scale to a large one, it visually appears that the polygons of the building blocks are superimposed together to be displayed. Accordingly, it is desirable to address how to merge the data of building blocks.

### SUMMARY

The present disclosure provides a method and apparatus for merging data of building blocks, a device and a storage medium.

In a first aspect, some embodiments of the present disclosure provide a method for merging data of building blocks, comprising: acquiring data of building blocks of a target work region; dividing the target work region containing the data of building blocks into at least one target region based on a preset geographic isolation attribute; dividing each target region into at least one grid region based on a direction feature obtained by performing a direction feature extraction on the data of building blocks; and determining a relative positional relationship between corresponding building blocks based on data of building blocks in each grid region, and merging data of building blocks of at least two building blocks having a preset positional relationship.

In a second aspect, embodiments of the present disclosure provide an apparatus for merging data of building blocks, comprising: a data acquiring unit, configured to acquire data of building blocks of a target work region; a target region dividing unit, configured to divide the target work region containing the data of building blocks into at least one target region based on a preset geographic isolation attribute; a grid region dividing unit, configured to divide each target region into at least one grid region based on a direction feature of a building block obtained by performing a direction feature extraction on the data of building blocks; and a merging unit, configured to determine a relative positional relationship between corresponding building blocks based on data of building blocks in each grid region, and merge data of building blocks of at least two building blocks having a preset positional relationship.

In a third aspect, some embodiments of the present disclosure provide an electronic device, comprising: at least one processor; and a memory, communicatively connected to the at least one processor; wherein, the memory, storing instructions executable by the at least one processor, the instructions, when executed by the at least one processor, cause the at least one processor to perform the method according to the first aspect.

In a forth aspect, some embodiments of the present disclosure provide A non-transitory computer readable storage medium, storing computer instructions, the computer instructions, being used to cause the computer to perform the method according to the first aspect.

In a fifth aspect, embodiments of the present disclosure provide a computer program product including a computer program, where the computer program, when executed by a processor, implements the method according to the first aspect.

It should be understood that the content described in this section is not intended to identify key or important features of the embodiments of the present disclosure, and is not used to limit the scope of the present disclosure. Other features of the present disclosure will be easily understood through the following description.

### BRIEF DESCRIPTION OF THE DRAWINGS

Accompanying drawings are used for a better understanding of the scheme, and do not constitute a limitation to the present disclosure. Here:
Fig. 1 is a flowchart of an embodiment of a method for merging data of building blocks according to the present disclosure;
Fig. 2 is a flowchart of another embodiment of the method for merging data of building blocks according to the present disclosure;
Fig. 3 is a schematic diagram of an application scenario of the method for merging data of building blocks according to the present disclosure;
Fig. 4 is another schematic diagram of an application scenario of the method for merging data of building blocks according to the present disclosure;
Fig. 5 is a schematic structural diagram of an embodiment of an apparatus for merging data of building blocks according to the present disclosure; and
Fig. 6 is a block diagram of an electronic device adapted to implement the method for merging data of building blocks according to embodiments of the present disclosure.

### DETAILED DESCRIPTION OF EMBODIMENTS

It should be understood that the content described herein is not intended to identify the key or important features of embodiments of the present disclosure, nor is it intended to limit the scope of the present disclosure. Other features of the present disclosure will be easily understood by the following description.

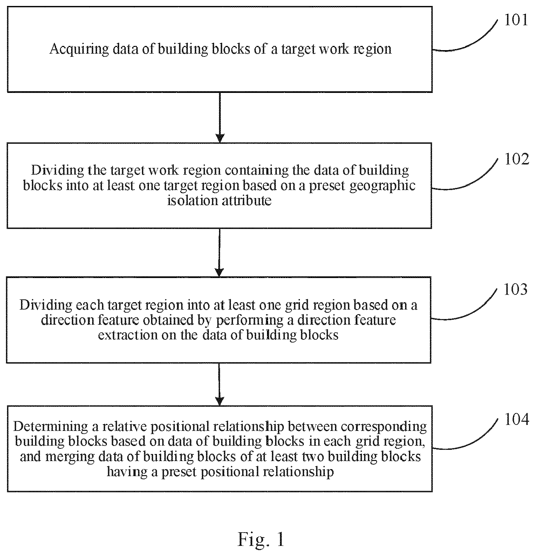

Fig. 1 is a flowchart 100 in which a method for merging data of building blocks according to the present disclosure may be applied.

As shown in Fig. 1, the method for merging data of building blocks in this embodiment includes the following steps:
Step 101, acquiring data of building blocks of a target work region.

In this embodiment, an executing body of the method for merging data of building blocks may acquire the data of building blocks of the target work region from a map surveying and releasing party. Clearly, when it is required to perform a building block analysis with high precision, a high confidence level and high accuracy on the target work region, the executing body may also acquire the data of building blocks of the target work region from data acquired through the collection in the field (by surveying, by surveying persons, in the field using professional instruments and meters). In addition, the executing body may also acquire the data of building blocks of the target work region by aggregating data obtained from the production of aerial photographs and satellite photographs. Specifically, the means of aerial photography or satellite photography includes airborne digital photographing, airborne remote sensing, and three-dimensional laser scanning (mainly used for a 3D map data collection). Here, the target work region refers to a selected area of which the data of building blocks is to be merged. The data of building blocks includes point line area data in original data of building blocks that is acquired by the executing body through the above approach.

Here, the target work region is a region in the map, and may be a specified region covering a certain geographical position range. Alternatively, in the process of marking the map or generating map data, any region to be marked or any region of which map data is to be generated may be used as a work region.

Step 102, dividing the target work region containing the data of building blocks into at least one target region based on a preset geographic isolation attribute.

In this embodiment, after acquiring the data of building blocks of the target work region, the executing body divides the target work region containing the data of building blocks into the at least one target region based on the preset geographic isolation attribute. Specifically, the preset geographic isolation attribute includes a road and river attribute, an AOI (area of interest) attribute, a POI (point of interest) hitch attribute, etc. Specifically, an architecture region is determined through an AOI. An AOI refers to functional region area data, which may represent the extent of a housing estate, the extent of a school, and the like. The AOI attribute may refer to an attribute of an entity object (e.g., an architecture and a road) within the functional region area, for example, a position, a coverage range and a type of the entity object. The building blocks in the architecture region determined through the AOI have a content association attribute, and the AOI may be directly used as a geographically isolated region for the merging of the building blocks. The POI pendant attribute may include the position of a geographic information point corresponding to a POI, a positional relationship or a dependency/collaboration relationship with an other POI in a group of POIs, the type of the POI, and the like. A region is divided by the group of the POIs. The relationship between the POIs, for example, a parent-child relationship (e.g., a group of points in a mall, and a group of points in an airport) and a collaboration relationship (e.g., a similarity between groups of POIs), may be used as a clustering condition of the group of the POIs. In addition, the circumscribed convex polygon of the group of the POIs may also be used as an isolated region for the merging of the building blocks. The daily data used on the electronic map is mostly POI data, for example, the points commonly marked as balloons on the map. In the electronic map, the POI data is strictly vector data (i.e., coordinate point annotation data), and is the most commonly used data layer on the electronic map. The POI data is only data of an information associated coordinate point, does not relate to a line and an area, and is the simplest vector data for a simple site annotation without the need for the outline of a corresponding surface feature. In general, the POI data is site data commonly used in daily life, for example, facilities commonly used in daily life such as a restaurant, a shop, a gas station and a bank, and clearly a manhole cover, and a fire hydrant. The region is divided through the road and river attribute. As the core element of the electronic map, the road and river attribute divides the real world into different living regions. A region area enclosed through a road attribute has high accuracy and a high coverage rate, and may also used as an isolated region for the merging of the building blocks. Specifically, the target region is a region composed according to an area such as an area enclosed by a housing estate and an area enclosed by a school, a region composed of information-associated coordinate points such as a restaurant and a shop, or a region divided by a road or a river when POI clusters are few.

Step 103, dividing each target region into at least one grid region based on a direction feature of a building block obtained by performing a direction feature extraction on the data of building blocks.

In this embodiment, after dividing the target work region into the at least one target region, the executing body divides the each target region into the at least one grid region based on the direction feature of the building block obtained by performing the direction feature extraction on the data of building blocks. Specifically, the direction feature refers to a direction feature of the edge of the shape of the projection of the building block to the ground, which may be a correlation between the direction of the same geographic isolation attribute and the direction of a corresponding building block within the geographic isolation attribute. Generally, there is a large possibility that building blocks belonging to the same geographic isolation attribute are in the same direction. The data of the building blocks in the same direction is retained while the isolation attribute is retained. A grid division is performed on a large target region, to divide the target region into at least one smaller grid region. Here, the size of each grid region may be preset, the sizes of different grid regions may be identical, and the building blocks in a single grid region have the same or similar direction feature.

Step 104, determining a relative positional relationship between corresponding building blocks based on data of building blocks in each grid region, and merging data of building blocks of at least two building blocks having a preset positional relationship.

In this embodiment, after dividing the each region into the grid region, the executing body determines the relative positional relationship between corresponding building blocks based on the data of building blocks in the each grid region, and merges the data of building blocks of the at least two building blocks having the preset positional relationship. Specifically, for the at least one grid region obtained by performing one division on the each target region, the data of the at least two building blocks having the preset positional relationship is merged in sequence. The executing body may also merge the data of the at least two building blocks having the preset positional relationship in the at least one divided grid region at the same time. The sequence in which the data of the building blocks in the at least one divided grid region is merged is not specifically limited in the present disclosure, and the data of the building blocks having the preset positional relationship in the at least one grid region may be merged at the same time or in sequence.

According to the method for merging data of building blocks provided in the above embodiment of the present disclosure, the accuracy of the merging of the data of building blocks is improved, and thus, the visual experience of finely divided regional building blocks is effectively optimized.

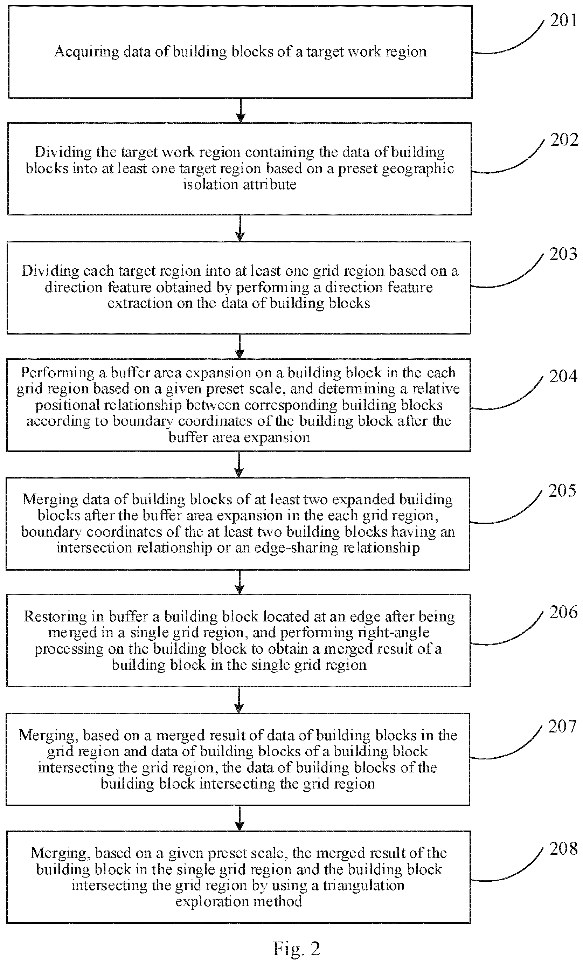

Further referring to Fig. 2, Fig. 2 is a flowchart 200 of another embodiment of the method for merging data of building blocks according to the present disclosure. As shown in Fig. 2, the method for merging data of building blocks in this embodiment may include the following steps:
Step 201, acquiring data of building blocks of a target work region.

Step 202, dividing the target work region containing the data of building blocks into at least one target region based on a preset geographic isolation attribute.

Step 203, dividing each target region into at least one grid region based on a direction feature of a building block obtained by performing a direction feature extraction on the data of building blocks.

The principles of steps 201-203 are similar to those of steps 101-103, which will not be repeatedly described here.

In some alternative implementations of this embodiment, the flow 200 of the above method further includes step 204.

Step 204, performing a buffer area expansion on a building block in the each grid region based on a given preset scale, and determining a relative positional relationship between corresponding building blocks according to boundary coordinates of the building block after the buffer area expansion.

In this implementation, the executing body performs the buffer area expansion on the building block in the each grid region based on the given preset scale, and determines the relative positional relationship between the corresponding building blocks according to the boundary coordinates of the expanded building block. In the data of building blocks of the target work region acquired by the executing body, some of the data of building blocks may contain scale information in itself. In order to uniformly process the data of building blocks, the buffer area expansion is performed on the data of building blocks based on the given preset scale. For example, the scale may be a scale having a unit length of 50m or 20m, which is not specifically limited in the present disclosure. The term "buffer area expansion" specifically means that the executing body automatically establishes a buffer area polygon layer with a certain width range around the entity of the data of building blocks, and determines the positional relationship between the established polygon layer and an other layer. In the buffer area expansion, a buffer area based on a point element (e.g., a POI region) is usually a circle with the point as the center and a certain distance as the radius. A buffer area based on a line element (e.g., a road and river region) is usually a parallel strip polygon with the line as the central axis, parallel strips of which are at a certain distance from the central axis. A buffer area based on the polygonal boundary of an area element (e.g., an AOI region) refers to the area expands outward or inward a certain distance to generate a new polygon. According to this implementation, the accuracy of the merging of the data of building blocks is improved through the buffer area expansion on the data of building blocks.

In this implementation, the relative positional relationship between the building blocks includes: an edge-sharing relationship, an intersection relationship, and a separation relationship. Determining, by the executing body, the relative positional relationship between the corresponding building blocks according to the boundary coordinates of the building block after the buffer area expansion is as follows. After performing the buffer area expansion, the executing body detects a situation where the coordinates of a plurality of points on the boundaries of the building blocks overlap. At this time, the executing body determines that the relative positional relationship between the two building blocks of which the boundaries have the plurality of points having overlapping coordinates is the edge-sharing relationship. Alternatively, the executing body detects that the coordinates of a point on the boundary of one building block are between the coordinates of the center point of an other building block and the coordinates of a point on an edge of the other building block. At this time, the executing body determines that the relative positional relationship between the two building blocks is the intersection relationship. Alternatively, the executing body detects that the coordinates of any point on the boundary of one building block are between the coordinates of the center point of the building block and the coordinates of any point on the boundary of an other building block. At this time, the executing body determines that the relative positional relationship between the two building blocks is the separation relationship. According to this implementation, the relative positional relationship between the building blocks is determined through the boundary coordinates after the buffer area expansion, rather than through the coordinates of any position in the building blocks after the buffer area expansion, and thus, the accuracy of the determination for the relative positional relationship between the building blocks may be improved.

In some alternative implementations of this embodiment, the flow 200 of the above method 200 further includes:
step 205, merging data of building blocks of at least two expanded building blocks after the buffer area expansion in the each grid region, boundary coordinates of the at least two building blocks having an intersection relationship or an edge-sharing relationship.

In this implementation, the executing body first merges the data of building blocks of the building blocks having the intersection relationship or the edge-sharing relationship, which is determined after the buffer area expansion, in the each grid region, rather than the data of building blocks of all building blocks in the grid region, thereby accelerating the speed of the merging of the data of building blocks.

In some alternative implementations of this embodiment, the flow 200 of the above method 200 further includes:
step 206, restoring in buffer a building block located at an edge after being merged in a single grid region, and performing right-angle processing on the building block to obtain a merged result of a building block in the single grid region.

In this implementation, the executing body performs the buffer area restoration on the building block located at the edge after the merging in the single grid region, and performs the right-angle processing on the building block to obtain the merged result of the building block in the single grid region. Specifically, the term of "buffer area restoration" refers to that the data of building blocks, which have been processed by the outward buffer area expansion and then by the merging process, expands inward a certain distance to generate a new polygon, which makes the merged data of building blocks closer to the outline data of a real building block, to maintain the outer outline of the original building block and avoid undesirable situations such as the pressing of a building block onto a road surface. Moreover, the buffer area restoration is for only the building block located at the edge after the merging in the single grid region. Since the data of building blocks located inside the single grid region does not relate to the maintenance of the outer outline of the building block, it is unnecessary to perform the buffer area restoration, so as not to destroy the merged result of the data of building blocks. In this implementation, right-angle processing based on a corrosion and expansion algorithm in the image processing is performed on the building block located at the edge after the merging in the single grid region. The vector data of the building block is regularized, which also optimizes the size of vector grid data stored in the electronic map, such that the merged result of the building block is more similar to the actual outline.

In some alternative implementations of this embodiment, the flow 200 of the above method 200 further includes:
step 207, merging, based on a merged result of data of building blocks in the grid region and data of building blocks of a building block intersecting the grid region, the data of building blocks of the building block intersecting the grid region.

In this implementation, after completing the merging for the data of building blocks of the building block inside the single grid region, the executing body continues to merge the data of building blocks of the building block intersecting the grid region. The specific merging method may be as follows. In the each grid region, the buffer area expansion is performed on the building block intersecting the grid region based on the given preset scale, and a relative positional relationship between boundary coordinates of the building block after the buffer area expansion and boundary coordinates in the merged data of building blocks of a building block inside the each grid region is determined according to the boundary coordinates of the building block after the buffer area expansion. When the relative positional relationship is the edge-sharing relationship or the intersection relationship, the building block intersecting the grid region and the merged building block inside the grid region are merged again. According to this implementation, the data of building blocks of the building block intersecting the grid region and the merged data of building blocks of the building block inside the grid region are merged again, and thus, it is implemented that the data of building blocks is merged without omission, the merged result is optimized, and the accuracy of the merging for the data of building blocks is improved.

In some alternative implementations of this embodiment, step 207 further includes:
step 208, merging, based on a given preset scale, the merged result of the building block in the single grid region and the building block intersecting the grid region by using a triangulation exploration method.

In this implementation, when merging the merged data of building blocks in the single grid area and the data of building blocks of the building block intersecting the grid region, the executing body may also perform the merging through the triangulation exploration method based on the give preset scale. Specifically, in this implementation, the merging using the triangulation exploration method is specifically as follows. The executing body first obtains sides having a minimum distance between the merged building block polygon in the single grid region and the building block polygon intersecting the grid region, establishes a Delaunay triangulation between the sides having the minimum distance to be used as a connection buffer between the building block polygons, and merges the merged building block polygon in the single grid region, the connection buffer region, and the building block polygon intersecting the grid region. Steps 201-208 are repeated until all the building block IDs are traversed, and thus, the merging for all the acquired data of building blocks of the target work region is completed.

According to this implementation, the merged building block polygon in the single grid region and the building block polygon intersecting the grid region are merged using the Delaunay triangulation. Accordingly, it is implemented that the data of building blocks of the building block intersecting the each grid region may be merged into the large merged building block inside the each grid region by using a traditional building block merging method without expanding a large number of buffers to merge the building blocks, thereby implementing a small optimization from a larger scope, and thus, the visual experience of finely divided regional building blocks is effectively optimized.

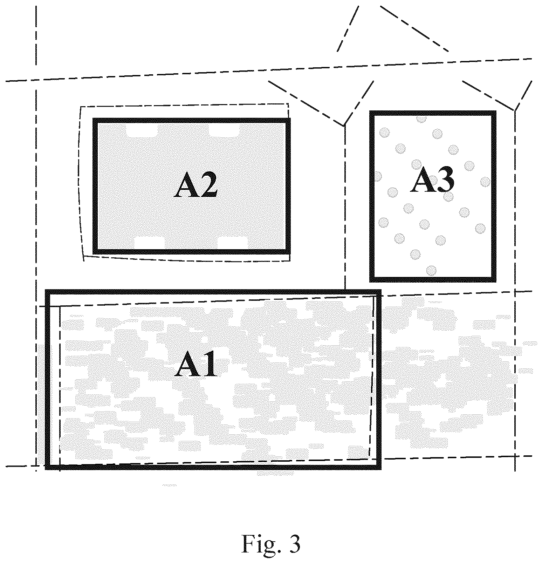

Further referring to Fig. 3, Fig. 3 is a schematic diagram of an application scenario of the method for merging data of building blocks according to the present disclosure. In the application scenario of Fig. 3, the division of a target work region into a target region is described.

Specifically, the largest region visible in Fig. 3 is the target work region, the region A1 is the target region divided according to the road and river attribute, a dotted line in the region A1 represents a road or a river, and the region A1 is a region surrounded by the road or the river. The region A2 is a target region divided according to the AOI (e.g., a community and a school) attribute. The region A3 is a target region divided according to the POI (e.g., the circumscribed convex polygon of a group of points) hitch attribute.

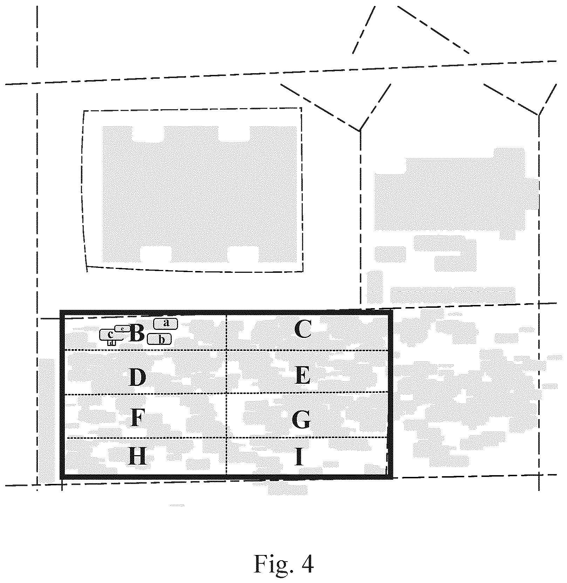

Further referring to Fig. 4, Fig. 4 is another schematic diagram of an application scenario of the method for merging data of building blocks according to the present disclosure. In the application scenario of Fig. 4, the division of a target region into a grid region and the merging for data of building blocks in each grid region are described.

Specifically, B, C, D, E, F, G, H and I in Fig. 4 respectively represent a grid region divided from a target region. Here, in the grid region B, a, b, c, d and e respectively represent a building block after a buffer area expansion in the grid region B. According to the boundaries of the building blocks a, b, c, d and e in Fig. 4, it may be determined that the relative positional relationship between a and b is a separation relationship, and thus the merging is not performed on the building blocks a and b. The relative positional relationship between c and d is an edge-sharing relationship, and thus the merging is performed on the building blocks c and d. The relative positional relationship between c and e is an intersection relationship, and thus the merging is performed on the building blocks c and e. Similarly, for the other building blocks in the grid region B, the relative positional relationship between building blocks may be determined in the same way, and the building blocks having the edge-sharing relationship or the intersection relationship may be merged into a large building block. Similarly, the building blocks in the grid regions C, D, E, F, G, H and I are merged in the same way as that of the merging of the building blocks in the grid region B.

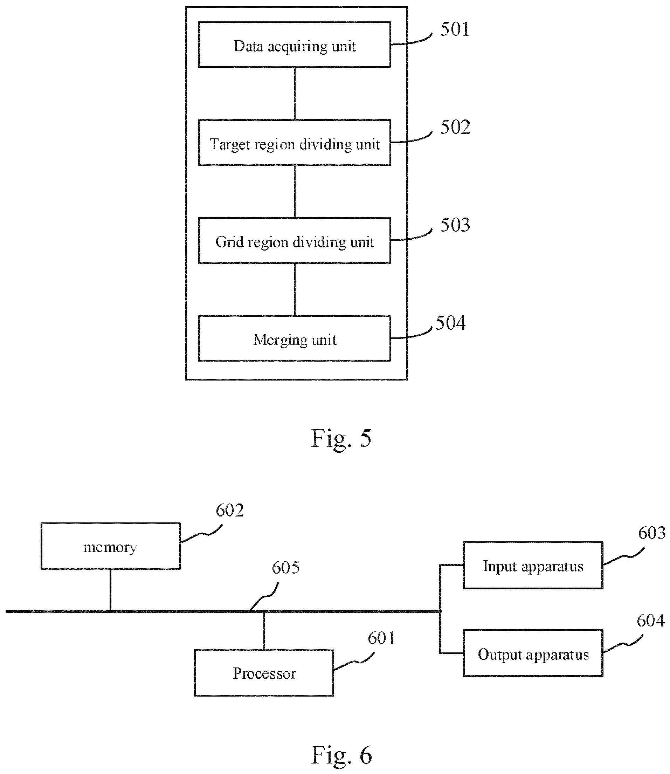

Further referring to Fig. 5, as an implementation of the method shown in the above drawings, the present disclosure provides an embodiment of an apparatus for merging data of building blocks. The embodiment of the apparatus corresponds to the embodiments of the method shown in Figs. 1 and 2, and the apparatus may be applied in various electronic devices.

As shown in Fig. 5, the apparatus 500 for merging data of building blocks in this embodiment includes a data acquiring unit 501, a target region dividing unit 502, a grid region dividing unit 503 and a merging unit 504.

The data acquiring unit 501 is configured to acquire data of building blocks of a target work region.

The target region dividing unit 502 is configured to divide the target work region containing the data of building blocks into at least one target region based on a preset geographic isolation attribute.

The grid region dividing unit 503 is configured to divide each target region into at least one grid region based on a direction feature of a building block obtained by performing a direction feature extraction on the data of building blocks.

The merging unit 504 is configured to determine a relative positional relationship between corresponding building blocks based on data of building blocks in each grid region, and merge data of building blocks of at least two building blocks having a preset positional relationship.

In some alternative implementations of this embodiment, the merging unit 504 further includes: a buffer expanding module, configured to perform a buffer area expansion on a building block in the each grid region based on a given preset scale, and determine the relative positional relationship between the corresponding building blocks according to boundary coordinates of the building block after the buffer area expansion.

In some alternative implementations of this embodiment, the merging unit further includes: a first merging sub-module, configured to merge data of building blocks of at least two building blocks having an intersection relationship or an edge-sharing relationship in the each grid region.

In some alternative implementations of this embodiment, the merging unit further includes: a buffer restoring unit, configured to perform a buffer area restoration on a building block located at an edge after the merging in a single grid region, and perform right-angle processing on the building block to obtain a merged result of a building block in the single grid region.

In some alternative implementations of this embodiment, the merging unit further includes: a second merging sub-module, configured to merge, based on a merged result of data of building blocks in the grid region and data of building blocks of a building block intersecting the grid region, the data of building blocks of the building block intersecting the grid region.

In some alternative implementations of this embodiment, the merging unit further includes: a third merging sub-module, configured to merge, based on a given preset scale, the merged result of the building block in the single grid region and the building block intersecting the grid region by using a triangulation exploration method.

It should be understood that the units 501-504 described in the apparatus 500 for controlling an instance correspond to the steps in the method described with reference to Figs. 1 and 2, respectively. Thus, the above operations and features described for the method of controlling an instance are also applicable to the apparatus 500 and the units included therein, which will not be repeatedly described here.

According to embodiments of the present disclosure, the present disclosure further provides an electronic device and a readable storage medium.

Fig. 6 is a block diagram of an electronic device of the method for merging data of building blocks according to embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processor, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 6, the electronic device includes one or more processors 601, a memory 602, and an interface for connecting parts, the interface including a high speed interface and a low speed interface. The parts are interconnected using different buses 605, and may be mounted on a common motherboard or in other ways as needed. The processors may process an instruction executed within the electronic device, the instruction including an instruction stored in the storage device or on the storage device to display graphical information of a GUI on an external input/output apparatus such as a display device coupled to the interface. In other implementations, a plurality of processors and/or a plurality of buses may be used, if desired, along with a plurality of storage devices. Also, a plurality of electronic devices may be connected, and each device provides a portion of necessary operations (e.g., as a server array, a group of blade servers or a multi-processor system). In Fig. 6, one processor 601 is taken as an example.

The memory 602 is a non-transitory computer readable storage medium provided in the present disclosure. Here, the storage device stores an instruction executable by at least one processor, to cause the at least one processor to perform the method for merging data of building blocks provided in the present disclosure. The non-transitory computer readable storage medium in the present disclosure stores a computer instruction, the computer instruction being used to cause a computer to perform the method for merging data of building blocks provided in the present disclosure.

As the non-transitory computer readable storage medium, the memory 602 may be used to store a non-transitory software program, a non-transitory computer executable program and a module such as a program instruction/module (e.g., the data acquiring unit 501, the target region dividing unit 502, the grid region dividing unit 503 and the merging unit 504 shown in Fig. 5) corresponding to the method for merging data of building blocks in the embodiments of the present disclosure. The processor 601 executes various functional applications and data processing of the server by running the non-transitory software program, the instruction and the module stored in the memory 602, i.e., implements the method for merging data of building blocks in the above embodiments of the method.

The memory 602 may include a storage program area and a storage data area. Here, the storage program area may store an operating system and an application program required for at least one function. The storage data area may store data, etc. created according to the use of an electronic device of the method for merging data of building blocks. In addition, the memory 602 may include a high speed random access memory, and may also include a non-transitory storage device, for example, at least one magnetic disk storage device, a flash storage device, or other non-transitory solid state storage devices. In some embodiments, the memory 602 may alternatively include a storage device disposed remotely relative to the processor 601. The remote storage device may be connected to the electronic device of the method for merging data of building blocks via a network. Examples of such network include, but not limited to, the Internet, an enterprise intranet, a local area network, a mobile communication network, and a combination thereof.

The electronic device of the method for merging data of building blocks may further include: an input apparatus 603 and an output apparatus 604. The processor 601, the memory 602, the input apparatus 603 and the output apparatus 604 may be connected via a bus or in other ways. In Fig. 6, the connection via the bus 605 is taken as an example.

The input apparatus 603 may receive an inputted number or inputted character information, and generate a key signal input related to the user setting and functional control of the electronic device of the method for merging data of building blocks. For example, the input apparatus is a touch screen, a keypad, a mouse, a track pad, a touch pad, a pointing stick, one or more mouse buttons, a track ball, a joystick, or the like. The output apparatus 604 may include a display device, an auxiliary lighting apparatus (e.g., an LED), a tactile feedback apparatus (e.g., a vibration motor), etc. The display device may include, but not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

According to the technical solution in the embodiments of the present disclosure, the accuracy of the merging of the data of building blocks is improved, and the visual experience of finely divided regional building blocks is effectively optimized.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method for merging data of building blocks, comprising:
acquiring (101) data of building blocks of a target work region;
dividing (102) the target work region containing the data of building blocks into at least one target region based on a preset geographic isolation attribute;
dividing (103) each target region into at least one grid region based on a direction feature obtained by performing a direction feature extraction on the data of building blocks; and
determining (104) a relative positional relationship between corresponding building blocks based on data of building blocks in each grid region, and merging data of building blocks of at least two building blocks having a preset positional relationship.

2. The method according to claim 1, wherein the determining (104) a relative positional relationship between corresponding building blocks based on data of building blocks in each grid region comprises:
performing (204) a buffer area expansion on a building blocks in the each grid region based on a given preset scale, and
determining (204) the relative positional relationship between corresponding building blocks according to boundary coordinates of the building blocks after the buffer area expansion.

3. The method according to claim 2, wherein the merging data of building blocks of at least two building blocks having a preset positional relationship comprises:
merging (205) data of building blocks of at least two building blocks after the buffer area expansion in the each grid region, wherein boundary coordinates of the at least two building blocks have an intersection relationship or an edge-sharing relationship.

4. The method according to claim 3, wherein the merging data of building blocks of at least two building blocks having a preset positional relationship further comprises:
performing a buffer area restoration on a building blocks located at an edge and merged in a single grid region, and
performing (206) right-angle processing on the building blocks to obtain a merged result of data of building blocks in the single grid region.

5. The method according to claim 3 or 4, further comprising:
merging (205) the data of building blocks of the building block intersecting the grid region, based on the merged result and data of building blocks of a building block intersecting the grid region,

6. The method according to claim 5, wherein the merging the data of building blocks of the building block intersecting the grid region comprises:
merging, based on a given preset scale, the merged result of building blocks in the single grid region and the building blocks intersecting the grid region by using a triangulation exploration method.

7. An apparatus for merging data of building blocks, comprising:
a data acquiring unit (501), configured to acquire data of building blocks of a target work region;
a target region dividing unit (502), configured to divide the target work region containing the data of building blocks into at least one target region based on a preset geographic isolation attribute;
a grid region dividing unit (503), configured to divide each target region into at least one grid region based on a direction feature of a building block obtained by performing a direction feature extraction on the data of building blocks; and
a merging unit (504), configured to determine a relative positional relationship between corresponding building blocks based on data of building blocks in each grid region, and merge data of building blocks of at least two building blocks having a preset positional relationship.

8. The apparatus according to claim 7, wherein the merging unit comprises:
a buffer expanding module, configured to perform a buffer area expansion on a building block in the each grid region based on a given preset scale, and determine the relative positional relationship between the corresponding building blocks according to boundary coordinates of the building block after the buffer area expansion.

9. The apparatus according to claim 8, wherein the merging unit further comprises:
a first merging sub-module, configured to merge data of building blocks of at least two building blocks having an intersection relationship or an edge-sharing relationship in the each grid region.

10. The apparatus according to claim 9, wherein the merging unit further comprises:
a buffer restoring unit, configured to perform a buffer area restoration on a building block located at an edge after the merging in a single grid region, and perform right-angle processing on the building block to obtain a merged result of a building block in the single grid region.

11. The apparatus according to claim 9 or 10, wherein the merging unit further comprises:
a second merging sub-module, configured to merge, based on a merged result of data of building blocks in the grid region and data of building blocks of a building block intersecting the grid region, the data of building blocks of the building block intersecting the grid region.

12. The apparatus according to claim 11, wherein the merging unit further comprises:
a third merging sub-module, configured to merge, based on a given preset scale, the merged result of the building block in the single grid region and the building block intersecting the grid region by using a triangulation exploration method.

13. An electronic device, comprising:
at least one processor (601); and
a memory (602), communicated with the at least one processor (601),
wherein the memory (602) stores an instruction executable by the at least one processor (601), and the instruction is executed by the at least one processor (601), to enable the at least one processor (601) to perform the method according to any one of claims 1-6.

14. A non-transitory computer readable storage medium, storing a computer instruction, wherein the computer instruction is used to cause the computer to perform the method according to any one of claims 1-6.

15. A computer program product comprising a computer program, the computer program, when executed by a processor (601), implementing the method according to any one of claims 1-6.
